# EUROPEAN PATENT APPLICATION

(11) **EP 4 779 549 A1**
(43) Date of publication of application: **22.07.2026**
(21) Application number: 25153059.8
(22) Date of filing: 21.01.2025
(51) Int. Cl.: G06Q 20/38, G06Q 40/04

(54) **SYSTEMS AND METHODS FOR PROVIDING ACCOUNT-TO-TOKEN INTEROPERABILITY IN CBDC NETWORKS**

(71) Applicant: Fluency Group Ltd, London WC2H 9JQ (GB)
(72) Inventor: MULLINS, Inga, London, WC2H 9JQ (GB); BRATANIEC, Pawel, London, WC2H 9JQ (GB); JAMROZ, Kamil, London, WC2H 9JQ (GB)
(74) Representative: Markieta, Jaroslaw Franciszek

(57) **Abstract**

The invention provides a solution for enabling the conversion of account-based assets to token-based assets and the other way around to digital payment systems. This is enabled by defining a conversion protocol that is able to construct conversion instructions to the payment system regardless of its architecture and corresponding conversion system, which is designed to be implemented in the form of smart contracts residing with the settlement system of that digital payment system architecture. The invention provides a set of techniques that can be used to convert digital account-type assets to token-based assets and token-type assets to account-based assets, defining specific algorithms for each.

## Description

### TECHNICAL FIELD

The present invention relates to the provision of digital currency interoperability in an electronic payment network utilising digitised assets or any other payment system, which may be used as such. More particularly, the present invention relates to the systems and methods for enabling a digital payment network to perform currency conversions, or any other similar transactions that can be categorised as such regardless of the representation methods they are using for recording assets. The present invention provides means for different types of assets being moved around the digital payment network, more specifically, it enables account-to-token and token-to-account conversions. Invention as per design is delivered in an architecture-agnostic manner, compatible with any digital payment system.

### BACKGROUND

The digital banking system of the future envisions a system that must not only facilitate digital payments but also enable seamless conversion between different types of currencies. To achieve this, the system must adopt a standardised and secure protocol that ensures interoperability while remaining flexible, efficient, and adaptable.

Addressing interoperability challenges requires the adoption of a specific protocol capable of functioning independently of specific implementations. That protocol establishes a common payment channel that handles standardised messages while supporting the conversion and exchange of various asset types within those messages. This ability to translate between asset types is crucial, as jurisdictions and vendors may favour different representations of digitised assets.

The two primary representations of digitised assets, account-based and token-based, each have unique characteristics. While existing solutions have made strides toward interoperability, they often fall short, either by supporting only similar asset types or by providing value exchange mechanisms that fail to retain the original characteristics and intended uses of the assets.

Bechtel, Alexander & Ferreira, Agata & Groß, Jonas & Sandner, Philipp. (2022). The Future of Payments in a DLT-Based European Economy: A Roadmap. 10.1007/978-981-16-7830-1_6 describes problems with the application of a distributed ledger technology (DLT) in a digitized economy, showing the need for a payment solution that is compatible with DLT-based decentralized networks.

Chan, Aldar. (2021). UTXO in Digital Currencies: Account-based or Token-based? Or Both?. 10.48550/arXiv.2109.09294. Elaborates on technical aspects of the account-based and token-based systems. Explaining there are different interpretations of the terms "tokens" and "token-based systems" in the literature around blockchain and digital currencies although the distinction between token-based and account-based systems is well entrenched in economics. Despite the wide use of the terminologies of tokens and tokenisation in the cryptocurrency community, the underlying concept sometimes does not square well with the economic notions or is even contrary to them. The UTXO design of Bitcoin exhibits partial characteristics of a token-based system and partial characteristics of an account-based system. A discussion on the difficulty of implementing the economic notion of tokens in the digital domain, along with an exposition of the design of UTXO, is given in order to discuss why UTXO-based systems should be viewed as account-based according to the classical economic notion.

US2024169354A1 discloses a method that includes receiving, by a mobile device, a designation of a token; linking, by the mobile device, the token to an account based on receiving an input from a user to couple to the account such that the mobile device is configured to receive updates regarding the token; based on the linking, which limits the usability of the solution to specific devices.

CN112633888A discloses an invention related to a Token-based data processing method and a Token-based data processing system. The method comprises the steps of generating a corresponding sub-account based on main account information of a main account; generating a corresponding sub-token based on the sub-account, and establishing an association relationship between the sub-token and a main account, which requires the creation of a complex multi-account hierarchy and keeping the information on their relation therefore impacting the mobility and privacy of the solution in a negative way.

To overcome these limitations, there is a pressing need for a solution that supports the interchangeability of account-based and token-based digital assets. Such a solution must enable the transfer and utilisation of these assets across diverse CBDC systems while preserving their distinct properties and allowing for their synthetic representation when necessary. This approach ensures that digital assets can function as intended, regardless of their origin or representation, fostering a truly interconnected and versatile financial ecosystem.

### SUMMARY OF THE INVENTION

The invention provides techniques for enabling a CBDC system a conversion between account-based and token-based digital assets while preserving their distinct properties and allowing for their synthetic representation when necessary. This is enabled by defining a simple conversion protocol that defines conversion messages and a conversion system that is able to handle those messages and act upon them.

In the first aspect, the invention provides a computed-implemented protocol for the construction of conversion messages in such a way that a message carries the intent of performing conversion, while defining the assets which are going to be converted, the desired assets to receive, authorisation signature and any other information specific to digital asset type needed for the conversion.

In the second aspect, the invention provides a computer-implemented system that is able to handle conversion messages in such a way that the system processes the message instructions, locks the assets which are going to be converted and unlocks the assets desired by the sender, then sends those assets back to the sender.

In the third aspect, the invention provides examples (use cases) of performing account-to-token and token-to-account conversions utilising defined conversion messages and conversion systems. All of the operations are performed within the settlement system of the digital payment system.

The invention presents a solution that improves on approaches known in the art. Firstly it does not depend on any specific hardware or device enabling the adoptability of the solution from the start. Secondly, it does not depend on any specific architecture of the digital payment system and allows the digital payment system to implement account and token-based assets according to its needs, without a need to adhere to specific implementation and/or without creating additional class of assets or structures such as sub-accounts etc. Thirdly, while the invention is created with the idea of being a programmable extension to the digital payment system, thanks to it loose-coupled nature it is possible to be implemented as an external extension instead, allowing it to work alongside non-programmable systems as well. It is therefore possible to use the solution on any digital payment system including CBDCs, DCAs, RTGSes, cryptocurrencies and other classes of digital payment systems.

### BRIEF DESCRIPTION OF THE DRAWINGS

The invention is described, by way of example only, with reference to the following drawings in which:
- Fig. 1: is a schematic diagram of the conversion message to be used within the proposed conversion system in order to initiate the account-to-token conversion proces,
- Fig. 2: is a schematic diagram of the conversion message to be used within the proposed conversion system in order to initiate the account-to-token conversion proces.
- Fig. 3: is a schematic diagram of conversion system components and the relations between them,
- Fig. 4: is a schematic diagram of the account-to-token conversion process taking advantage of the conversion system and proper conversion message,
- Fig. 5: is a schematic diagram of the token-to-account conversion process taking advantage of the conversion system and proper conversion message.

### DETAILED DESCRIPTION

### Terminology

As used herein, the following terms have the meanings indicated below:
A 'payment network' is understood to refer to a network which is built around a centralised set of unified servers and/or distributed components ('nodes') that are distinct from one another. A payment network can function as a ledger and provide the capability of owning any type of asset including a digitised form of currency on it, and being able to transfer those assets freely to other users of that payment network.

A 'Central Bank Digital Currency' (CBDC) is understood to refer to an electronic representation of a traditional fiat currency. A CBDC is issued by an appropriate issuing authority referred to as a Central Bank that is capable of issuing currency on behalf of a nation, state, region, or other such entity. An example of a Central Bank is the European Central Bank for the EU region. The term 'digital national currency' may be used interchangeably with CBDC and also the term 'CBDC asset'.

A 'CBDC network' is understood to refer to a payment network that facilitates operations with a CBDC, primarily payments between users of the CBDC network, e.g. payments between merchants and private individuals, or between pairs of private individuals. However, the invention is not limited to financial payments on a CBDC as other operations such as financial products can also be provided by a payment network operating in accordance with the invention. The invention particularly finds utility in an account-based CBDC network in which users of that network each have an account that identifies them uniquely, e.g. by linking them to a cryptographic key pair (typically, with the public key serving as an address for the user account). A CBDC network can transfer CBDC between users but is not limited to this, and other electronic assets can also be transferred or otherwise operated on in a CBDC network.

A 'source CBDC system` is synonymous with the 'CBDC network', but with a higher emphasis on its technological side. Specifically referencing the 'CBDC network' which is on the sending end of the cross-chain transfer. The user who sends the CBDC asset resides on this network.

A 'smart contract' is understood to refer to a contract that is written in computer code. The smart contract code can be executed to produce a result, e.g. a smart contract may enable one user to transfer funds to another user in a payment network. Smart contracts, per se, are known in the art and so a detailed description of smart contracts is not provided here in the interests of brevity. The term 'smart contract' is understood to include an online smart contract that is deployed on the payment network's ledger itself (e.g. a distributed ledger smart contract), an offline smart contract or an external module with the functionality of a smart contract. The external module could be either software or hardware-based.

A `payment` is to be understood equally to 'transaction' and implies the creation of a new entry in the payment network's or CBDC network's ledger indicating the transfer of assets between a sender and a recipient. It is equivalent to a bank transfer but relates to a specific payment network and/or CBDC network.

A `user' is understood as an individual, business or public institution transacting via the CBDC network. The end user can act as a sender or a recipient. Any end-user interaction with the CBDC system is initiated by their account, wallet or similar structure and is able to create, sign and send payments on the CBDC network.

A 'CBDC payment` is understood as a type of payment that can be performed by an end-user having an active connection to the CBDC system through any means. CBDC payment is the default type of payment and can carry information about the sender, recipient, type and amount of assets being transferred etc.

A 'CBDC token payment` is understood as a type of payment that is performed with the use of tokens, which include UTXO-tokens, BILL-tokens and any other type of tokens in the general understanding of the word "token".

A 'Smart Contract Message` or simply `Message` is understood as a type of message that contains arbitrary message parameters required to communicate with smart contracts. A message can be either input to the smart contract if it is carried within a payment or can be output of the smart contract if it is the computation result of the smart contract being called.

A 'conversion' is a special type of payment that performs the conversion of one type of asset into another by carrying a conversion message into the conversion system.

A 'conversion message` is a special type of message that defines conversion intent and all necessary context and authorization information in order to enable the conversion system to perform the conversion.

A 'conversion system' is a system of smart contracts deployed on the settlement system that can perform the conversion of assets if it is called by payment carrying a conversion message.

A 'settlement system` or 'ledger' is part of the CBDC network that is responsible for settling and recording all payments. The settlement system is also able to provide the required programmability to deploy smart contracts.

A `locking` of assets or 'asset-lock' is a process which is an abstract process that depending on CBDC implementation may refer either to the actual lock of funds within a smart contract in such a way those assets are not owned by anyone until unlocked or alternatively it may refer to revoking the assets from circulation which includes the destruction of any data structures associated with that money.

An `unlocking ` of assets or `asset-unlock ` is a process that is the reverse of locking, meaning that depending on CBDC it may refer to either the actual unlocking of funds which were previously locked or alternatively it may refer to issuing the previously revoked assets, adding them back to the circulation and recreating any data structures associated with that money.

This detailed description is split into three parts. The first part describes a conversion protocol that is able to form conversion messages that define the intent of performing the conversion while providing all necessary context information and authorisation signatures. The second part describes a conversion system that is able to handle those conversion messages and perform the conversion by interacting with the account asset and token asset contracts. The third part defines a set of examples (use cases) that showcase the conversion between account and token assets.

### Part 1. Conversion Protocol

Conversion protocol defines the messages that can be used as input to the Conversion System that enables conversion between account and token type of assets. Conversion protocol defines two types of messages:
Account-to-Token Conversion Message is structured as follows:
Sender: identifier,
Recipient: identifier,
Nonce: Bytes,
Amount: NumericValue,
InpCurrency: identifier,
OutCurrency: identifier,
SenderSig: signature

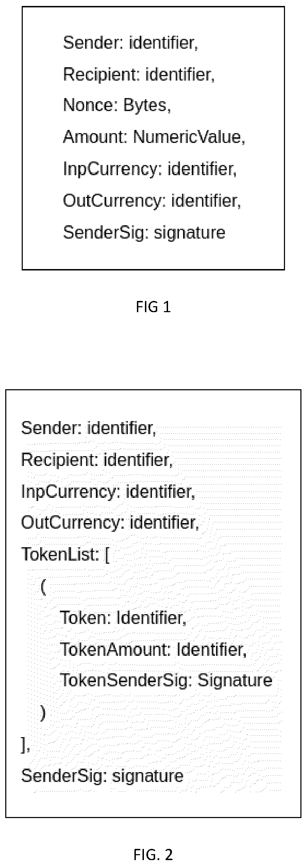

Account-to-Token Conversion Message is also depicted in FIG 1.

Which can be understood as:
Sender - identifier of sender account in a form suitable for used settlement system,
Recipient - identifier of recipient account in a form suitable for used settlement system,
Nonce - a stream of bytes that represent unique value preventing double spending of the conversion instruction,
Amount - a numeric value representing the amount of account-based assets to convert,
InpCurrency - identifier of account-based asset to convert,
OutCurrency - identifier of a token-based asset to receive conversion to,
SenderSig - a signature that authorizes the transfer of a given InpCurrency's Amount for conversion sake

Token-to-Account Conversion Message is structured as follows:

```
       Sender: identifier,
       Recipient: identifier,
       InpCurrency: identifier,
       OutCurrency: identifier,
       TokenList:
               [
                        (
                           Token: Identifier,
                           TokenAmount: Identifier,
                           TokenSenderSig: Signature
                       )
               ],
       SenderSig: signature
```

Token-to-Account Conversion Message is also depicted in FIG 2.

Which can be understood as:
Sender - identifier of sender account in a form suitable for used settlement system,
Recipient - identifier of recipient account in a form suitable for used settlement system,
TokenList - a list of tokens to convert, in which each item consists of:
   Token - identifier of a particular token
   TokenAmount: - the value of the particular token,
   TokenSenderSig: - signature authorising transfer of this particular token
InpCurrency - identifier of account-based asset to convert,
OutCurrency - identifier of a token-based asset to receive conversion to,
SenderSig - a signature that authorises the transfer of given InpCurrency's TokenList for conversion sake

### Part 2. Conversion System

The system components required for the implementation of the Conversion System are divided into five groups: Messaging System, Integration System, Ingestion System, and Settlement System. The first three groups are exclusive to the Conversion System itself while the second group is a special part which is assumed to exist on the settlement system and allows the Conversion System to interact with it in order to perform conversions.

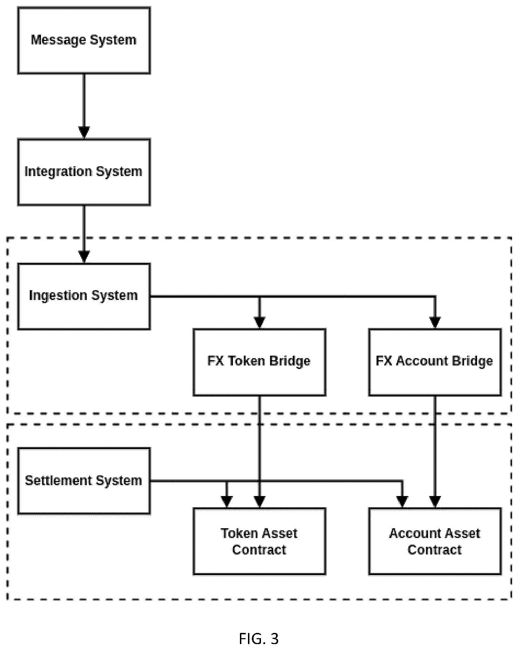

Conversion System components and the relation between them are presented in FIG 3.

Messaging System is a component responsible for handling conversion messages. It does so in two directions - User Device to Integration System and Integration System to User Device. Outgoing communication is handled by observing the state of the Integration System deployed on the CBDC system and passing any messages invoked there together. The messaging system implements the functionality required for authorisation, automation, queueing, processing, verifying and recording conversion messages. Messaging System resides within the Conversion System, outside of the Settlement System.

The proposed solution for Messaging System is to act as a kind of middleman between the User Device and the Integration System in such a way that messages initiated by the CBDC system are caught by the Messaging System then translated into an actual call to be made to the Integration System and the other way around. Messaging System is a vital part of the solution that allows decoupling participants from each other.

From the technical perspective, the Messaging System acts as an orchestrator of messages exchanged between the User Device and the Integration System. Each message run through the Messaging System is verified and processed accordingly by running the specific calls onto the recipient system. Messaging System has the possibility to use that mechanism to execute two-phase commits. For example, when doing conversion between more than one settlement system, a certain amount of funds can be locked on one system, synthetic assets can be reserved for distribution on the other system, then when both actions are successful, only then both states are approved and the exchange executes in an atomic fashion.

Integration System is a component responsible for translating conversion messages to specific calls of the conversion system's inner components. It is a programmable interface deployed directly within a CBDC system that has the capability of handling and recording conversion messages. The Integration System takes advantage of the programmable layer provided by the settlement system and provides its functionality via on-chain smart contracts deployed directly within the Settlement System.

Ingestion System is a component supplementary to the Integration System. The main responsibility of the Ingestion System is to provide a means of managing the liquidity of converted assets - i.e. reducing the circulating supply of converted assets and increasing the supply of assets to be converted. Any conversion transactions which may involve non-zero monetary value will require that value to be locked within the ingestion system before its counterpart is unlocked.

Ingestion System takes advantage of the programmable layer provided by the settlement system and provides its functionality via on-chain smart contracts deployed directly on the Settlement System. Ingestion System can be treated as an extension to the Integration System that enables that system with the possibility to manage liquidity of multiple types of tokens. The Integration System itself does not have the capability of owning or managing any type of funds, so instead, it uses the Ingestion System to do it on its behalf. Although technically, the Ingestion System is part of the conversion system, it is envisioned to be reusable with other CBDC components.
- FX Account Bridge is a module that implements a locking/unlocking mechanism for account-based funds (a native method of representing funds in an account-based system including the Aureum platform).
- FX Token Bridge is a module that implements a locking/unlocking mechanism for token-based funds (a token is to be exclusively understood as UTXO-token (ex: Bitcoin)).

Settlement System is a component that is responsible for handling each one and any transactions made within the CBDC system including CBDC payments and custom process triggers that involve calls to Conversion System smart contracts. Settlement System handles both accounting and settlement of any transactions and enables system participants to initiate and send transactions between each other.

Settlement System is a component that is not part of the Conversion System directly, but instead, it is a module that already exists within the CBDC system. This component allows sending and receiving transactions while providing some sort of ledger containing transaction history and providing all additional functionality required for non-repudiation and security of those transactions. Settlement System's programmability feature is the most vital to the Conversion System, as it is the place where all related contracts reside.
- For each account-type asset settlement system provides an account-based asset contract which is a registry that contains the mapping of accounts owning assets with the amount of balances they own and exposes an interface to authorise asset transfers by owners
- For each token-type asset settlement system provides a token-based asset contract which is a registry that contains a list of active tokens and exposes an interface to authorise asset transfers by owners of each token

### Part 3. Conversion Examples (Use Cases)

Conversion System enables the following conversion use cases:
1. An account-based asset to a token-based asset.
2. A token-based asset to an account-based asset.

It should be noted that 'use cases' 1 and 2 are inversely related to each other depicting a circular flow in their summation across the CBDC network. These `use cases' represent real-world situations whereby a user, whether that be an individual, a business, or a financial institution, would need to transfer a CBDC asset owned by them to another user (or account owned by them) in such a way that requires conversion of assets in which sending asset type is different from received asset type.

### [1] An account-based asset to a token-based asset conversion use-case:

Presented process is defined as a set of following steps:
- End-user (A) interacts with their device in order to initiate conversion payment in order to exchange account asset for token asset
- End-user (A) prepares conversion message using his device; then proceeds to select the appropriate messaging bridge from options given by the device
- End-user (A) authorizes conversion message by signing conversion message
- End-user (A) sends the conversion message to the messaging system (MES)
- Messaging System (MES) queues message
- Messaging System (MES) processes messages by sending them to Integration System (ITS)
- Integration System (ITS) prepares message processing:
   ∘ Integration System (ITS) verifies the message
   ∘ Integration System (ITS) translates the message from conversion message syntax to a set of instructions able to be called directly on the conversion system components
- Integration System (ITS) authorizes account asset lock
   ∘ Integration System (ITS) calls transfer method on Ingestion System (IGS)
      ■ Ingestion System (IGS) uses the provided message signature and authorises the transfer of account assets specific in conversion message via FX Account Contract (FAC)
      ■ Ingestion System (IGS) locks those assets within FX Account Bridge (FAB) using hash-lock
   ∘ Integration System (ITS) receives proof of lock from Ingestion System (IGS)
- Integration System (ITS) processes the message
- Integration System (ITS) requests reservation of both previously locked account assets and token assets that need to be prepared for sending after conversion
   ∘ Integration System (ITS) sends reservation command to Ingestion System (IGS) which proceeds the command to FX Account Bridge (FAB)
   ∘ Integration System (ITS) sends reservation command to Ingestion System (IGS) which proceeds the command to FX Token Bridge (FTB)
   ∘ Integration System (ITS) waits for both confirmations
- Integration System (ITS) authorizes token asset unlock
   ∘ Integration System (ITS) calls transfer method on Ingestion System (IGS)
      ■ Ingestion System (IGS) selects tokens to be unlocked and unlocks them using a hashes corresponding to each one's hash-lock
      ■ Ingestion System (IGS) authorizes transfer of token assets via FX Token Contract (FBC)
   ∘ Integration System (ITS) receives the receipt
- Integration System (ITS) observes receipt and translates it into proper conversion message receipt which then passes back to the Messaging System (MES)
   ∘ Messaging System (MES) sends the conversion message receipt back to the End-User (A) device.

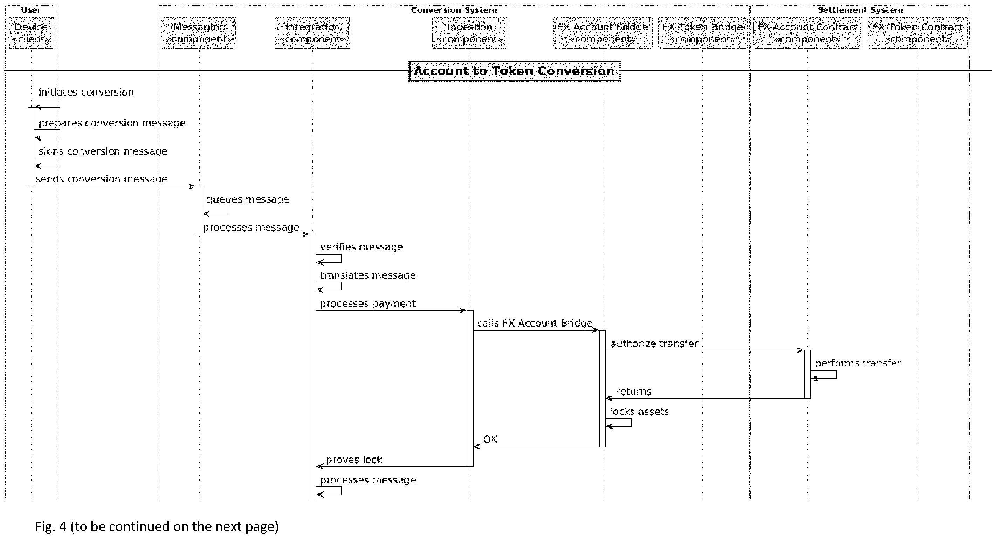

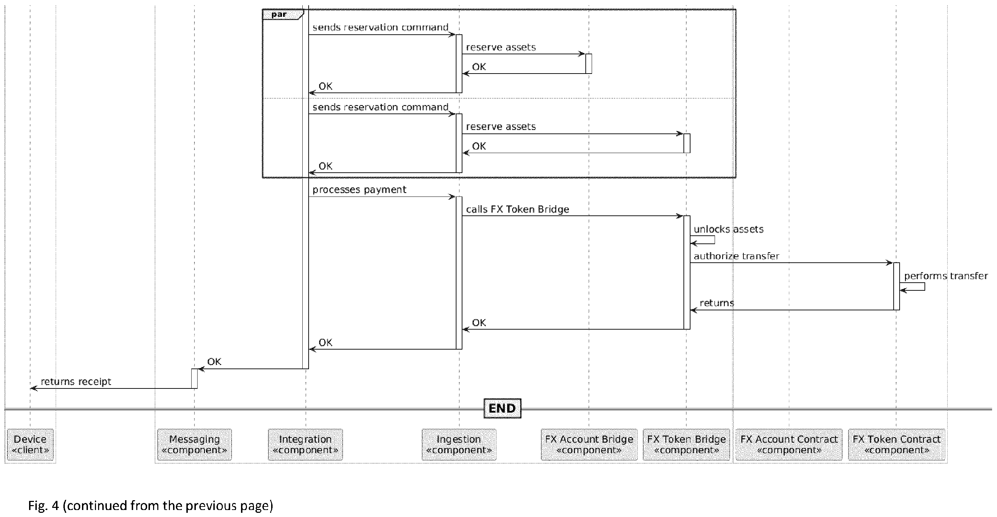

This procedure is also illustrated in detail in FIG 4.

This procedure is a new solution to handling token-to-account conversion in such a way that, it does not create an assumption on how the account or token-based assets need to be represented in detail, other than obvious distinctions, and therefore does not require heavy modifications to payment systems wanting to implement it and/or not requiring them to implement additional class of assets. Further it is not limited to simple device payments or linking the tokens to devices which makes it usable for any kind of payment within the digital payment system. It relies on the Conversion System which is a novel approach which consists of Messaging, Integration and Ingestion components which are viable to be implemented in digital payment systems that provide programmability through smart contracts and/or systems that do not provide programmability through external extensions and/or services making it compatible with any digital payment system.

It relies on a locking mechanism which depending on the digital payment system's need may be implemented either as an actual functional lock that works well for digital payment systems aimed for interoperability or as an issuance mechanism that works well for digital payment systems aimed for handling currencies or tokenized assets such as CBDCs or cryptocurrencies.

### [2] A token-based asset to an account-based asset conversion use-case

Presented process is defined as a set of following steps:
- End-user (A) interacts with their device in order to initiate conversion payment in order to exchange token assets for account assets
- End-user (A) prepares a conversion message using his device; selects tokens to convert; and then proceeds to select the appropriate messaging bridge from options given by the device
- End-user (A) authorises the conversion message by signing each selected token and signing the conversion message
- End-user (A) sends the conversion message to the messaging system (MES)
- Messaging System (MES) queues message
- Messaging System (MES) processes messages by sending them to Integration System (ITS)
- Integration System (ITS) prepares message processing:
   ∘ Integration System (ITS) verifies the message
   ∘ Integration System (ITS) translates the message from conversion message syntax to a set of instructions able to be called directly on the conversion system components
- Integration System (ITS) authorises token asset lock
   ∘ Integration System (ITS) calls transfer method on Ingestion System (IGS)
      ■ Ingestion System (IGS) uses the provided message signature and signature of each token to convert and authorise the transfer of token assets specific in the conversion message via FX Bridge Contract (FBC)
      ■ Ingestion System (IGS) locks those assets within FX Token Bridge (FBB) using separate hash-lock for each token
   ∘ Integration System (ITS) receives proof of lock from Ingestion System (IGS)
- Integration System (ITS) processes the message
- Integration System (ITS) requests reservation of both previously locked token assets and account assets that need to be prepared for sending after conversion
   ∘ Integration System (ITS) sends reservation command to Ingestion System (IGS) which proceeds the command to FX Account Bridge (FAB)
   ∘ Integration System (ITS) sends reservation command to Ingestion System (IGS) which proceeds the command to FX Token Bridge (FTB)
   ∘ Integration System (ITS) waits for both confirmations
- Integration System (ITS) authorizes account asset unlock
   ∘ Integration System (ITS) calls transfer method on Ingestion System (IGS)
      ■ Ingestion System (IGS) unlocks account assets using the corresponding hash-lock
      ■ Ingestion System (IGS) authorises the transfer of account assets via FX Account Contract (FAC)
   ∘ Integration System (ITS) receives the receipt
- Integration System (ITS) observes receipt and translates it into proper conversion message receipt which then passes back to Messaging System (MES)
   ∘ Messaging System (MES) sends the conversion message receipt back to the End-User (A) device.

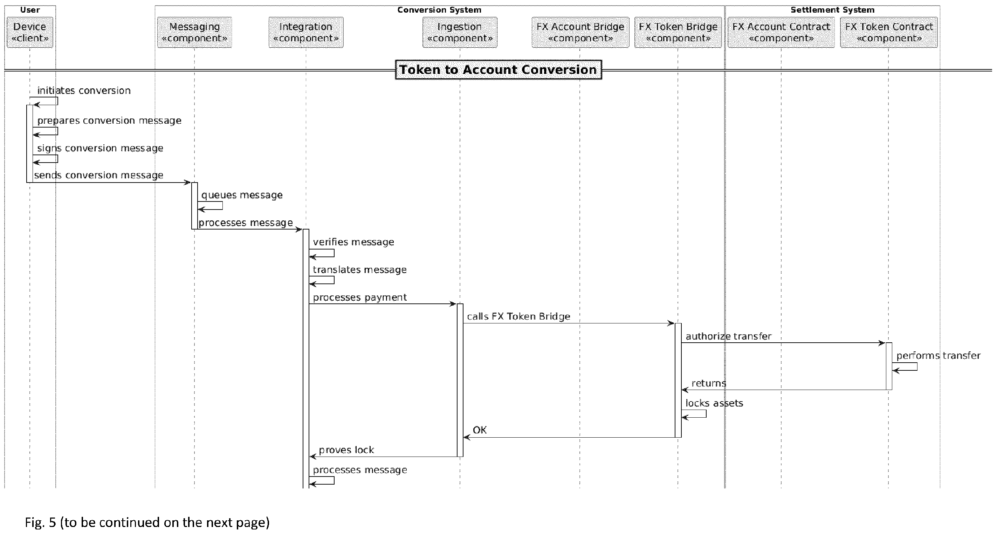

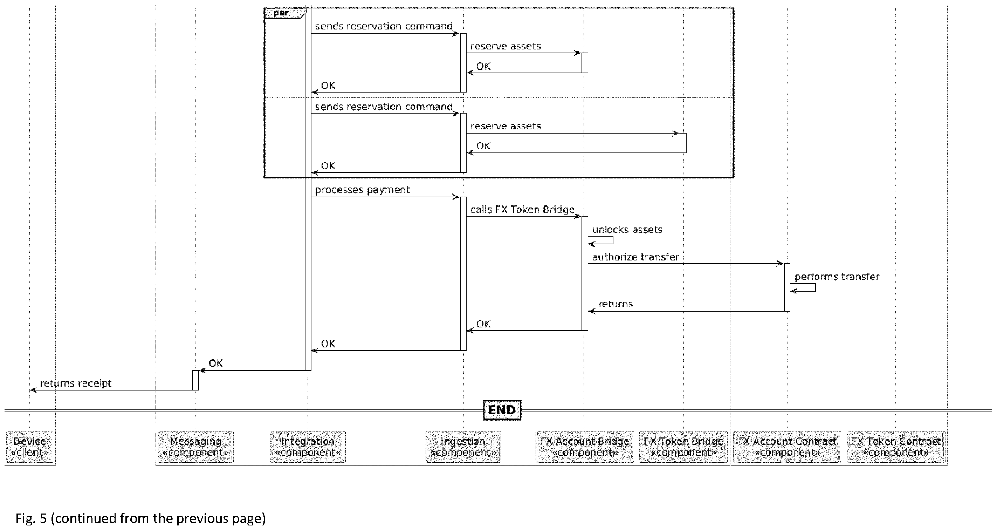

This procedure is also illustrated in detail in FIG 5.

This procedure is a new solution to handling token-to-account conversion in such a way that, it does not create an assumption on how the account or token-based assets need to be represented in detail, other than obvious distinctions, and therefore does not require heavy modifications to payment systems wanting to implement it and/or not requiring them to implement additional class of assets. Further it is not limited to simple device payments or linking the tokens to devices which makes it usable for any kind of payment within the digital payment system. It relies on a Conversion System that is a novel approach which consists of Messaging, Integration and Ingestion components which are viable to be implemented in digital payment systems that provide programmability through smart contracts and/or systems that do not provide programmability through external extensions and/or services making it compatible with any digital payment system. It relies on a locking mechanism which depending on the digital payment system's need may be implemented either as an actual functional lock that works well for digital payment systems aimed for interoperability or as an issuance mechanism that works well for digital payment systems aimed for handling currencies or tokenized assets such as CBDCs or cryptocurrencies.

## Claims

1. A computer-implemented method of converting account-based assets to token-based assets within a CBDC system, following account-to-token use flow comprising steps of:
interacting of an end user (A) with their device to initiate conversion payment to exchange an account assets for a token asset,
preparing a conversion message and then proceeding to selecting the appropriate messaging bridge,
authorizing the conversion message by signing the conversion message,
sending the conversion message to a Messaging System (MES),
queuing the conversion message by the Messaging System (MES),
processing the conversion messages by sending them to an Integration System (ITS) preparing the conversion messages processing in the Integration System (ITS) by:
verifying the conversion message;
translating the conversion message from conversion message syntax to a set of
instructions able to be called directly on the conversion system components, authorizing an account CBDC lock in the Integration System (ITS) by
calling a transfer method on an Ingestion System (IGS), and
at the Ingestion System (IGS) using a provided message signature to authorise the transfer of account CBDCs specified in the conversion message via an FX Account Contract (FAC), and
locking those CBDCs within a FX Account Bridge (FAB) using a hash-lock,
receiving a proof of lock from the Ingestion System (IGS) processing the conversion message by the Integration System (ITS) requesting reservation of both previously locked account CBDCs and token CBDCs that need to be prepared for sending after conversion at the Integration Systems (ITS) by
sending a reservation command to the Ingestion System (IGS) which proceeds a command to the FX Account Bridge (FAB),
sending the reservation command to the Ingestion System (IGS) which proceeds the reservation command to FX Token Bridge (FTB),
waiting for confirmations from both systems,
authorizing a token CBDC unlock at the Integration System (ITS) by
calling the transfer method on the Ingestion System (IGS),
selecting tokens to be unlocked and unlocks them using a hashes corresponding to each one's hash-lock,
authorizing the transfer of token CBDCs via a FX Token Contract (FBC),
receiving a receipt,
at the Integration system (ITS) observing the receipt and translating it into a proper conversion message receipt and then passing the conversion confirmation receipt back to the Messaging System (MES), followed by sending the conversion message receipt back to the device of the end-user (A) by the Messaging System (MES).

2. A computer-implemented method of converting token-based assets to account-based assets within a CBDC system, following token-to-account use flow comprising of:
interacting of an end user (A) with their device to initiate conversion payment to exchange token CBDCs for an account CBDCs
preparing a conversion message using his device; selecting tokens to convert; and then proceeding to select an appropriate messaging bridge,
authorizing the conversion message by signing each selected token and signing the conversion message,
sending the conversion message to a Messaging System (MES),
queuing the conversion message by the Messaging System (MES),
processing the conversion messages by sending them to an Integration System (ITS),
preparing the conversion message processing in the Integration System (ITS) by:
verifying the conversion message,
translating the conversion message from conversion message syntax to a set of
instructions able to be called directly on the conversion system components, authorizing a token CBDC lock in the Integration System (ITS) by
calling a transfer method on an Ingestion System (lGS)
at the Ingestion System (IGS) using the provided message signature and signature of each token to convert and authorise a transfer of token CBDCs specified in the conversion message via a FX Bridge Contract (FBC),
locking those CBDCs within FX Token Bridge (FBB) using a separate hash-lock for each token,
receiving a proof of lock from the Ingestion System (IGS),
processing the conversion message by the Ingestion System (IGS),
requesting reservation of both a previously locked token CBDCs and an account CBDCs that need to be prepared for sending after conversion at the Integration System (ITS),
sending a reservation command to the Ingestion System (IGS) which proceeds the reservation command to FX Account Bridge (FAB),
sending the reservation command to the Ingestion System (lGS) which proceeds the reservation command to FX Token Bridge (FTB),
waiting for confirmations from both systems,
authorizing the account CBDC to unlock at the Integration System (ITS) by
calling a transfer method on the Ingestion System (lGS),
unlocking the account CBDCs using a corresponding hash-lock,
authorizing the transfer of the account CBDCs via a FX Account Contract (FAC),
receiving the receipt,
observing the receipt and translating it into a proper conversion message receipt and
then passing the conversion confirmation receipt back to the Messaging System (MES) followed by sending the conversion message receipt back to the device of the ned-user (A) by the Messaging System (MES).
